# EUROPEAN PATENT SPECIFICATION

(11) **EP 3 078 271 B1**
(45) Date of publication and mention of the grant of the patent: **20.11.2019**
(21) Application number: 14868608.2
(22) Date of filing: 28.11.2014
(51) Int. Cl.: A21D 2/14, A23D 9/00, A21D 2/16, A21D 13/16

(54) **MATERIAL FOR SWOLLEN FOOD OF LAYERED FLOUR AND SWOLLEN FOOD OF LAYERED FLOUR**
MATERIAL FÜR GEQUOLLENE SPEISE AUS GESCHICHTETEM MEHL SOWIE GEQUOLLENE SPEISE AUS GESCHICHTETEM MEHL
MATÉRIAU POUR ALIMENT GONFLÉ DE FARINE EN COUCHES, ET ALIMENT GONFLÉ DE FARINE EN COUCHES

(30) Priority: 03.12.2013 JP 2013250290
(43) Date of publication of application: 12.10.2016
(73) Proprietor: The Nisshin OilliO Group, Ltd., Tokyo 104-8285 (JP)
(72) Inventor: SAKURADA, Miho, Yokosuka-shi Kanagawa 239-0832 (JP); OZAWA, Takuya, Yokosuka-shi Kanagawa 239-0832 (JP); HASOME, Yoshimune, Yokosuka-shi Kanagawa 239-0832 (JP); OGASA, Yuuma, Yokosuka-shi Kanagawa 239-0832 (JP)
(74) Representative: Dennemeyer & Associates S.A.
(86) International application number: PCT/JP2014/081544
(87) International publication number: WO 2015/083635

(56) References cited:
- WO-A1-2006/120910
- JP-A- 2009 034 089
- JP-A- 2011 072 271
- JP-A- 2013 048 577
- US-A1- 2009 081 352
- US-B1- 6 503 546
- R. ZIMMERMANN: "Nichtkovalente Wechselwirkungen von Lipoiden im Weizenteig", NAHRUNG - FOOD, vol. 23, no. 3, 1 January 1979 (1979-01-01), pages 289-295, XP055379731, XX ISSN: 0027-769X, DOI: 10.1002/food.19790230314

## Description

### TECHNICAL FIELD

### <Cross Reference>

This application claims priority from Japanese Patent Application No. 2013-250290 filed with the Japan Patent Office on December 3, 2013.

The present invention relates to dough for a layered cereal flour puffed food, and a layered cereal flour puffed food obtained by baking the dough, such as pies, croissants, or Danish pastries.

### BACKGROUND ART

Layered cereal flour puffed foods obtained by rolling oils and fats into dough for pies, croissants, Danish pastries, and the like and by baking the obtained layered dough have the crispy and pleasant texture, and because of this, the layered cereal flour puffed foods are popular bakery foods. Since the crispy texture is very important for such foods, various suggestions have been made to provide the crispy texture.

For example, Patent Literature 1 has disclosed the method of manufacturing bakery foods, in which at least one or more kinds of starch and cereal flour derived from potatoes, tapioca, and glutinous cereals is mixed in raw material flour by 5 to 20 wt%. Patent Literature 2 has disclosed the pastry formed using the roll-in oil and fat composition containing 0.05 to 10 wt% of monoglyceride organic acid ester. Patent Literature 3 has disclosed the bakery product formed using the roll-in oil and fat composition containing oils and fats with a direct β-type crystal and having a particular SFC (solid fat content).

The above suggestions, however, have merely succeeded in modifying the baked layered cereal flour puffed food into having a crispy texture and failed to meet the current demands for the crispy but fluffy and soft texture. To meet the demand for the soft texture, for example, Patent Literature 4 has disclosed the bakery foods formed using the oil and fat composition for bakery foods with a particular triglyceride composition. Patent Literature 5 has described the layered wheat flour puffed food formed using the roll-in oil-in-water emulsified composition containing a particular crystal adjuster for delaying the crystallization of the oils and fats.

The above suggestions, however, have been intended mainly to achieve the soft and juicy texture at the sacrifice of the crispy texture. In addition, people have already come to lose interest in such layered wheat flour puffed foods. In view of this, the development of layered cereal flour puffed foods having the crispy texture, which is unique to the layered cereal flour puffed foods, and additionally having the soft texture and the good melting mouthfeel has been anticipated.

Further, JP 2009-034089A discloses a plastic oil-and-fat composition for roll-in use comprising an oil-and-fat A, an oil-and-fat B and an oil-and-fat C in an oil phase, wherein the oil-and-fat A is an interesterified fat containing 20-60 mass% 12-14C saturated fatty acid and 40-80 mass% 16-18C saturated fatty acid, the oil-and-fat B contains 25-38 mass% 16C saturated fatty acid, 0.5-6 mass% 18C saturated fatty acid and 40-60 mass% 18C mono-unsaturated fatty acid, and the oil-and-fat C is a liquid oil.

US 2009/081352A1 discloses an oil/fat composition including an oin/fat which is in a fluid state at 30 °C; solid fat derived from palm oil and highly hydrogenated oil of high erucic rapeseed oil.

Finally, JP 2013-048577A discloses a bread dough comprising a middle chain fatty acid-containing oils and fats composition including 0.5 to 100 mass% 6-10C saturated fatty acids, so that the total amount of 6-10C saturated fatty acids based on the 100 mass% cereal flour becomes 0.05 - 3.0 mass%.

### CITATION LIST

### PATENT LITERATURE

PATENT LITERATURE 1: JP-A-2002-345394
PATENT LITERATURE 2: JP-A-2000-253816
PATENT LITERATURE 3: JP-A-2002-65160
PATENT LITERATURE 4: JP-A-2013-188205
PATENT LITERATURE 5: WO2007/026466

### SUMMARY OF THE INVENTION

### PROBLEMS TO BE SOLVED BY THE INVENTION

An object of the present invention is to provide dough for a layered cereal flour puffed food having the soft texture and the good melting mouthfeel while having the crispy texture after the baking, provide a layered cereal flour puffed food obtained by heating and baking the dough, and moreover provide a plastic oil and fat composition suitable in the preparation of the dough.

### SOLUTION TO THE PROBLEMS

As a result of concerted studies made for solving the above problem, the present inventors have found out that the above problem can be solved when the dough for a layered cereal flour puffed food includes a particular amount of triacylglycerol containing one or more kinds of fatty acids selected from caproic acid, caprylic acid, and capric acid as a constituent fatty acid. Thus, the present invention has been completed.

That is to say, the present invention provides dough, a food, an oil and fat composition, and a method of manufacturing the dough as described below.
(1) Dough for a layered cereal flour puffed food, including 10 to 20 mass% of triacylglycerol containing one or more kinds of fatty acids selected from caproic acid, caprylic acid, and capric acid as a constituent fatty acid.
(2) The dough for a layered cereal flour puffed food according to (1) wherein the caproic acid, caprylic acid, and capric acid in the triacylglycerol include caproic acid by 30 mass% or less.
(3) The dough for a layered cereal flour puffed food according to (1) or (2), wherein the caproic acid, caprylic acid, and capric acid in the triacylglycerol include capric acid by 30 mass% or more.
(4) The dough for a layered cereal flour puffed food according to any of (1) to (3), wherein in triacylglycerol containing one or more kinds of fatty acids selected from caproic acid, caprylic acid, and capric acid as the constituent fatty acid, triacylglycerol consisting only of fatty acids selected from caproic acid, caprylic acid, or capric acid or combination thereof as the constituent fatty acid is included by 30 mass% or more.
(5) A layered cereal flour puffed food obtained by heating and baking the dough for a layered cereal flour puffed food according to any of (1) to (4).
(6) A plastic oil and fat composition to be rolled-in, comprising from 35 to 80 mass% of triacylglycerol containing one or more kinds of fatty acids selected from caproic acid, caprylic acid, and capric acid as a constituent fatty acid.
(7) The plastic oil and fat composition to be rolled-in according to (6), including oils and fats A and oils and fats B:
   oils and fats A: oils and fats with a solid fat content (SFC) of 60 to 100% at 20°C, 35 to 90% at 30°C, 0 to 50% at 40°C, and 0 to 30% at 45°C; and
   oils and fats B: oils and fats with a solid fat content (SFC) of 10% or less at 10°C, containing 40 mass% or more of triacylglycerol containing one or more kinds of fatty acids selected from caproic acid, caprylic acid, and capric acid as a constituent fatty acid.
(8) A manufacturing method for dough for a layered cereal flour puffed food, the method including rolling a plastic oil and fat composition, which includes triacylglycerol containing one or more kinds of fatty acids selected from caproic acid, caprylic acid, and capric acid as a constituent fatty acid, by 30 to 70 parts by mass with respect to 100 parts by mass of cereal flour, and then providing dough including 10 to 20 mass% of triacylglycerol containing one or more kinds of fatty acids selected from caproic acid, caprylic acid, and capric acid as the constituent fatty acid.

### EFFECTS OF THE INVENTION

According to the present invention, dough for a layered cereal flour puffed food the soft texture and the good melting mouthfeel while having the crispy texture after the baking can be provided. A layered cereal flour puffed food obtained by heating and baking the dough can also be provided. Moreover a plastic oil and fat composition which is suitable in the preparation of the dough and has good workability can be provided.

### EMBODIMENTS OF THE INVENTION

The present invention will hereinafter be described in details. The dough for a layered cereal flour puffed food in the present invention is dough with a number of layers obtained by rolling oils and fats in cereal flour dough. The layered cereal flour puffed food is a food obtained by heating and baking such dough. Specific examples thereof include pies, Danish pastries, and croissants.

The dough for a layered cereal flour puffed food according to the present invention includes 10 to 20 mass% of triacylglycerol containing one or more kinds of fatty acids selected from caproic acid, caprylic acid, and capric acid as a constituent fatty acid. The caproic acid, the caprylic acid, and the capric acid are also referred to as n-hexanoic acid, n-octanoic acid, and n-decanoic acid, respectively and are so-called medium-chain fatty acids. Triacylglycerol containing one or more kinds of fatty acids selected from caproic acid, caprylic acid, and capric acid as a constituent fatty acid may hereinafter be referred to as medium-chain fatty acid containing triacylglycerol (also represented as MTG).

The medium-chain fatty acid containing triacylglycerol, which is used for the dough for a layered cereal flour puffed food according to the present invention, is triacylglycerol having the medium-chain fatty acid as a part of or the entire constituent fatty acid. Triacylglycerol having the medium-chain fatty acid as the entire constituent fatty acid is medium-chain fatty acid triacylglycerol (hereinafter also represented by MCT), and is included in MTG.

The medium-chain fatty acid included in the entire medium-chain fatty acid containing triacylglycerol (MTG) used in the dough for a layered cereal flour puffed food according to the present invention contains capric acid by preferably 30 mass% or more, more preferably 50 mass% or more, and much more preferably 60 to 100 mass%. The medium-chain fatty acid included in the entire MTG contains the caproic acid by preferably 30 mass% or less, more preferably 20 mass% or less, and much more preferably 0 to 10 mass%. It is preferable that the medium-chain fatty acid included in the entire MTG contains the capric acid and the caproic acid within the above range because the layered cereal flour puffed food obtained by heating and baking the dough for a layered cereal flour puffed food has the good flavor and burdens the stomach less.

The fatty acid of the medium-chain fatty acid containing triacylglycerol in the present invention other than the medium-chain fatty acid is preferably the long-chain fatty acid. The long-chain fatty acid is the saturated and unsaturated fatty acid with 12 or more carbons, preferably 12 to 22 carbons. Examples of the long-chain fatty acid include lauric acid, myristic acid, palmitic acid, stearic acid, behenic acid, oleic acid, linoleic acid, and linolenic acid. The long-chain fatty acid preferably has 16 to 22 carbons.

When the medium-chain fatty acid containing triacylglycerol in the present invention includes the long-chain fatty acid (hereinafter this triacylglycerol is also referred to as MLCT) and the medium-chain fatty acid is represented by M and the long-chain fatty acid is represented by L, this triacylglycerol can have structures represented by MLL, LML, LLM, MML, MLM, and LMM. The medium-chain fatty acid triacylglycerol has the structure represented by MMM. How to analyze and calculate the medium-chain fatty acid containing triacylglycerol is based on the methods known in the art and specifically, the summary (Journal of America Oil Chemists' Society 40, 242-247 (1963)) by R. J. VANDERWAL can be referred to.

The medium-chain fatty acid containing triacylglycerol in the present invention is obtained by interesterification and/or esterification usually performed in the process for oils and fats. For example, in the case of the medium-chain fatty acid triacylglycerol (MCT), the medium-chain fatty acid and glycerol are subjected to dehydrating and condensing through heat treatment at 120 to 180°C with the catalyst, preferably without the catalyst, in accordance with the normal method, and this reaction occurs preferably under reduced pressure. If necessary, the reaction may be followed by catalyst removing, and decoloring and deodorizing, which are usually performed in a refining process for the edible oils and fats.

The medium-chain fatty acid containing triacylglycerol including the long-chain fatty acid in the present invention is obtained by the interesterification of mixed oils and fats. The mixed oils and fats are obtained by, for example, mixing MCT and the oils and fats containing 90 mass% or more of the fatty acids with 16 or more carbons as the constituent fatty acids such as rape-seed oil or palm oil, at a mass ratio of preferably 10 : 90 to 90 : 10, more preferably 20 : 80 to 80 : 20. A method of the interesterification is not limited in particular, and either chemical interesterification or enzymatic interesterification may be employed. The chemical interesterification uses a chemical catalyst such as sodium methylate as a catalyst, and the reaction is non-selective interesterification with low position selectivity. Some natural oils and fats include oils and fats containing MTG, as typified by coconut oil and palm kernel oil. The above oils and fats, and also the oils and fats obtained from the above oils and fats subjected to one kind or two or more kinds of processes selected from mixing, hydrogenating, fractionating, and interesterification can be used as the entire or a part of the MTG in the present invention.

The chemical interesterification can be performed by a normal method; for example, a catalyst is added by 0.1 to 1 mass% to raw material oils and fats that are sufficiently dried and then, the raw material oils and fats including the catalyst are stirred under reduced pressure at 80 to 120°C for 0.5 to 1 hour to cause the reaction. After the interesterification reaction, the catalyst is washed away with water and then decoloring and deodorizing, which are usually performed in a refining process for the edible oils and fats, can be performed.

The enzymatic interesterification is performed using a lipase preparation as the catalyst, and by selecting the lipase preparation, the interesterification with 1,3-position selectivity can be performed. The enzymatic interesterification can be performed by a normal method; for example, the lipase preparation is added to raw material oils and fats by 0.01 to 5 mass% relative to the oils and fats and then, the raw material oils and fats including the catalyst are stirred at 30 to 70°C for 1 to 40 hours to cause the reaction. After the interesterification reaction, the lipase preparation is removed by filtration and then decoloring and deodorizing, which are usually performed in a refining process for the edible oils and fats, can be performed.

The dough for a layered cereal flour puffed food according to the present invention preferably includes 10 to 18 mass%, preferably 10 to 16 mass%, of the medium-chain fatty acid containing triacylglycerol. The MTG in the dough for a layered cereal flour puffed food according to the present invention includes MCT by preferably 30 mass% or more, more preferably 50 mass% or more, and much more preferably 60 mass% or more. The dough for a layered cereal flour puffed food according to the present invention includes MCT by preferably 5 to 20 mass%, more preferably 7 to 18 mass%, and much more preferably 9 to 16 mass%. It is preferable that the dough for a layered cereal flour puffed food according to the present invention includes the medium-chain fatty acid containing triacylglycerol in the amount within the above range because the layered cereal flour puffed food with the crispy texture and additionally the soft texture and the good melting mouthfeel can be provided.

The medium-chain fatty acid containing triacylglycerol (MTG) included in the dough for a layered cereal flour puffed food according to the present invention is preferably in the state of being rolled in the dough. In a convenient embodiment for achieving the medium-chain fatty acid containing triacylglycerol rolled in the dough for a layered cereal flour puffed food, first a plastic oil and fat composition including MTG is prepared and then, the plastic oil and fat composition is used for manufacturing the dough for a layered cereal flour puffed food. Here, the plastic oil and fat composition may be a water-containing margarine type or an anhydrous shortening type. The plastic oil and fat composition preferably contains oils and fats by 60 to 100 mass%, more preferably 80 to 98 mass%. The plastic oil and fat composition contains MTG from 35 to 80 mass% more preferably 40 to 80 mass%, and much more preferably 51 to 80 mass%.

The plastic oil and fat composition may include edible oils and fats without MTG as necessary, unless the features according to the present invention are lost. For example, the edible oils and fats may be palm oil, cacao fat, sal fat, shea fat, soybean oil, rape-seed oil, corn oil, cotton-seed oil, safflower oil, sunflower oil, rice oil, sesame oil, olive oil, grape-seed oil, nut oil, linseed oil, lard, beef tallow, fish oil, or oils and fats obtained by performing one kind or two or more kinds of processes including mixing, fractionating, hydrogenating, and interesterification on any of those oils and fats.

A preferred embodiment of the plastic oil and fat composition includes the following oils and fats A and oils and fats B.

Oils and fats A: oils and fats with a solid fat content (SFC) of 60 to 100% at 20°C, 35 to 90% at 30°C, 0 to 50% at 40°C, and 0 to 30% at 45°C.

Oils and fats B: oils and fats with a solid fat content (SFC) of 10% or less at 10°C, containing 40 mass% or more of triacylglycerol containing one or more kinds of fatty acids selected from caproic acid, caprylic acid, and capric acid as a constituent fatty acid.

A preferred embodiment of the oils and fats A is hard butter (cacao butter substitute). Examples of the hard butter include lauric hard butter (such as fully hydrogenated palm kernel stearin), high-trans acid hard butter (such as mid fraction fractionated from the oils and fats obtained by anisotropically hydrogenating the palm fractionated soft oil), tempered hard butter (such as stearin fraction fractionated from shea fat or sal fat), and non-lauric, non-trans, non-tempered hard butter (such as mid fraction fractionated from the oils and fats obtained by interesterifying the palm stearin). A preferred embodiment of the oils and fats A is the interesterified oils and fats of the mixed oil obtained by mixing the lauric oils and fats containing 30 mass% or more of lauric acid as the constituent fatty acid and oils and fats containing 90 mass% or more of fatty acid with 16 or more carbons as the constituent fatty acid at a mass ratio of 20 : 80 to 80 : 20 (preferably, 30 : 70 to 70 : 30). The interesterified oils and fats preferably have an iodine value of 0 to 40, preferably 0 to 20. The SFC of the oils and fats A may be adjusted by mixing the fully hydrogenated oil, which is the edible oils and fats without MTG, to any of the aforementioned hard butters to interesterified oils and fats. The plastic oil and fat composition contains the oils and fats A by preferably 20 to 50 mass%, more preferably 25 to 45 mass%.

A preferred embodiment of the oils and fats B is medium-chain fatty acid triacylglycerol (MCT). A preferred embodiment of the oils and fats B is the interesterified oils and fats of the mixed oil obtained by mixing MCT and the oils and fats containing 90 mass% or more of fatty acid with 16 or more carbons as the constituent fatty acid (for example, liquid oil such as rape-seed oil or corn oil) at a mass ratio of 10 : 90 to 90 : 10 (preferably, 20 : 80 to 80 : 20). The SFC of the oils and fats B may be adjusted by mixing the edible oils and fats (for example, liquid oil such as rape-seed oil or corn oil) with a melting point of 10°C or less in any of the aforementioned MCT to interesterified oils and fats. The medium-chain fatty acid containing triacylglycerol is contained in the oils and fats B by preferably 50 to 100 mass%, more preferably 60 to 100 mass%. The plastic oil and fat composition contains the oils and fats B by preferably 50 to 80 mass%, more preferably 55 to 75 mass%.

Unless the features of the present invention are lost, the plastic oil and fat composition may contain a food material used for general margarine and shortening as necessary. Examples of the food material include emulsifiers such as glycerin fatty acid ester and lecithin, thickener and stabilizer such as starches, gums, and pectin, salty agents such as salt and potassium chloride, acidifier such as acetate, lactic acid and gluconic acid, saccharides and sugar alcohols, sweetener such as stevia and aspartame, colorant such as β-carotene, caramel, and monascus pigment, antioxidant such as tocopherol and tea extract, vegetable protein such as wheat protein and soybean protein, eggs and various egg products, flavoring agents, spice, seasoning agents, pH adjuster, food preservatives, dairy products such as whole milk powder and skim milk, fruits, fruit juice, coffee, nut paste, cocoa mass, and cocoa powder. Such a food material is contained by preferably 10 mass% or less, more preferably 5 mass% or less.

The oil and fat composition can be manufactured in accordance with the normal method employed in the manufacture of margarine and shortening. First, an oil-soluble material is mixed in melted oils and fats including medium-chain fatty acid containing triacylglycerol, whereby an oil phase is prepared. The obtained oil phase is mixed and emulsified with a water phase obtained by mixing a water-soluble material in water as necessary. The resulting mixture is plasticized by rapid cooling with, for example, a votator, a combinator, or a perfector.

The shape of the plastic oil and fat composition may be any shape, for example, like a sheet, a block, a cylinder, or a cube. In particular, from the viewpoint of the processability, the preferable shape is a sheet-like shape. If the plastic oil and fat composition has a sheet-like shape, the preferable size is 50 to 1000 mm in width, 50 to 1000 mm in length, and 1 to 50 mm in thickness.

The dough for a layered cereal flour puffed food according to the present invention may include the food material, which is used for the normal layered cereal flour puffed foods such as pies, croissants, and Danish pastries, in addition to 10 to 20 mass% of triacylglycerol containing one or more kinds of fatty acids selected from caproic acid, caprylic acid, and capric acid as the constituent fatty acid.

The cereal flour used in the dough for a layered cereal flour puffed food according to the present invention may include the cereal flour that is normally used in the bakery foods. Specific examples thereof include wheat flour (strong flour, medium-strength flour, and weak flour), barley flour, rice flour, corn flour, rye flour, soba flour, and soybean flour. The cereal flour preferably includes wheat flour. The cereal flour includes wheat flour by preferably 50 mass% or more, more preferably 70 mass% or more.

Examples of the food material to be mixed in the dough for a layered cereal flour puffed food according to the present invention in addition to the cereal flour include powder such as vital gluten, starch, and cellulose powder, yeast, yeast food, enzyme, salt, saccharides such as sugar (granular sugar and superior soft sugar), sugar alcohols, egg (whole egg and egg mixture), various egg products, dairy products such as skim milk and milk, oils and fats to be kneaded in (such as butter), water, and aqueous components such as soybean milk.

The dough for a layered cereal flour puffed food according to the present invention can be manufactured under the manufacturing condition and by the manufacturing method that are similar to those employed for the normal dough for a layered cereal flour puffed food such as pies, croissants, and Danish pastries. The dough for a layered cereal flour puffed food can be manufactured through a process of, for example, mixing, fermenting (first fermenting), dividing and rounding, retarding, rolling-in, retarding, rolling-in, retarding, molding, and final proofing (final fermenting). In the process of rolling-in, preferably, the cereal flour dough is folded so as to have the sheet-shaped plastic oil and fat composition covered with the dough. Then, the folded dough is spread thinly and folded again and this process is repeated to form a number of layers. Alternatively, the dough including the kneaded chip-shaped oil and fat composition may be spread thinly and folded to form layers, like a kneaded pie. The number of times of rolling-in and retarding can be adjusted depending on the product. In the case of pies, the fermenting process is omitted. The dough before or after the final proofing may be frozen and preserved. As the filling or topping to be added to the dough, fruits, jam, cream, or the like may be used.

In the manufacture of the dough for a layered cereal flour puffed food according to the present invention, the plastic oil and fat composition including the medium-chain fatty acid containing triacylglycerol is used to be rolled into the dough. The plastic oil and fat composition is rolled in the dough so that the dough contains triacylglycerol containing one or more kinds of fatty acids selected from caproic acid, caprylic acid, and capric acid as a constituent fatty acid by 6 to 20 mass%, preferably 30 to 70 parts by mass and more preferably 40 to 60 parts by mass according to the appended method claim.

The layered cereal flour puffed food according to the present invention can be obtained by heating and baking (baking) the dough for a layered cereal flour puffed food according to the present invention. The term heating and baking (baking) refers to, preferably, heating in an oven or broiling. In addition, the heating and baking refer to all forms of cooking with heat, including frying and steaming. In the case of heating in an oven, for example, the heating and baking are conducted at 190 to 240°C for 5 to 30 minutes. By heating and baking the dough for a layered cereal flour puffed food according to the present invention, the layered cereal flour puffed food with the crispy texture and additionally the soft texture and the good melting mouthfeel after the baking can be provided.

### Examples

Next, the present invention will hereinafter be described in more detail with reference to Examples and Comparative Examples. The present invention, however, is not limited to these examples.

### <Analysis method>

The content amount of triacylglycerol was measured based on AOCS Ce5-86. The amount of each fatty acid was measured based on AOCS Ce1f-96. The solid fat content (SFC) was measured based on "reference oil and fat analysis test method" by Japan Oil Chemists' Society, 22.9-2003, solid fat content (NMR method).

### <Oils and fats>

### [Oils and fats A1]

Interesterified oil obtained by chemically interesterifying mixed oil including 50 parts by mass of fully hydrogenated palm stearin oil and 50 parts by mass of fully hydrogenated palm kernel olein oil (fatty acids in triacylglycerol include 3.2 mass% of medium-chain fatty acid (specifically, 2.0 mass% of caprylic acid, 1.2 mass% of capric acid), and contain MTG by 13.2 mass% and MCT by 0 mass%, with an SFC of 94% at 20°C, 83% at 30°C, 40% at 40°C, and 17% at 45°C) was used as oils and fats A1.

### [Oils and fats B1]

MCT (manufactured by Nisshin OilliO Group, Ltd., containing MCT by 100 mass% with an SFC of 0% at 10°C) including caprylic acid (n-octanoic acid) and capric acid (n-decanoic acid) as the fatty acids included in triacylglycerol at a mass ratio of 30 : 70 was used as oils and fats B1.

### [Oils and fats B2]

MCT (manufactured by Nisshin OilliO Group, Ltd., containing MCT by 100 mass% with an SFC of 0% at 10°C) including caprylic acid (n-octanoic acid) and capric acid (n-decanoic acid) as the fatty acids included in triacylglycerol at a mass ratio of 75 : 25 was used as oils and fats B2.
[Vegetable oils and fats 1]: Palm olein (manufactured by Nisshin OilliO Group, Ltd., with an iodine value of 61 containing MTG by 0 mass%) was used as vegetable oils and fats 1.
[Vegetable oils and fats 2]: Rape-seed oil (manufactured by Nisshin OilliO Group, Ltd., containing MTG by 0 mass%) was used as vegetable oils and fats 2.

### <Preparation of plastic oil and fat composition to be rolled-in>

An oil phase and a water phase were prepared in accordance with Table 1, and the resulting mixture was plasticized by a normal method through rapid cooling with a combinator. The mixture was then molded in a sheet-like shape with a width of 220 mm, a length of 300 mm, and a thickness of 10 mm. Thus, plastic oil and fat compositions 1 to 3 were prepared. Table 1 shows the amount of MTG, the amount of MCT in MTG, and the amount of capric acid contained in the medium-chain fatty acid included in oils and fats, in each oil and fat composition.

**[Table 1]**

| Table 1: Plastic oil and fat composition | | | | unit: mass% |
|---|---|---|---|---|
| | | Plastic oil and fat composition 1 (Example) | Plastic oil and fat composition 2 (Comparative Example) | Plastic oil and fat composition 3 (Comparative Example) |
| Oil phase | Oils and fats A1 | 32.8 | 32.8 | 32.8 |
| | Oils and fats B1 | 61.0 | - | - |
| | Oils and fats B2 | - | 20.0 | - |
| | Vegetable Oils and fats 1 | - | 41.0 | - |
| | Vegetable Oils and fats 2 | - | - | 61.0 |
| | Flavoring agent | 0.13 | 0.13 | 0.13 |
| | Emulsifier | 0.57 | 0.57 | 0.57 |
| Water phase | Water | 5.0 | 5.0 | 5.0 |
| | Salt | 0.5 | 0.5 | 0.5 |
| Total | | 100 | 100 | 100 |
| Content amount of MTG | | 65.3 | 24.3 | 4.3 |
| Content amount of MCT in MTG | | 93.4 | 82.2 | 0 |
| Content amount of capric acid in medium-chain fatty acid | | 69.4 | 25.6 | 37.5 |

### <Manufacture and evaluation of croissant>

With the sheet-shaped plastic oil and fat compositions 1 to 3 obtained as above, croissants were manufactured in accordance with Table 2. That is to say, the dough was prepared excluding the plastic oil and fat composition in accordance with Table 2. After 500 g of plastic oil and fat composition was put on 1800 g of the obtained dough, the dough was rolled in by 3 × 3 × 3 by the normal method. The obtained dough was shaped and thus the croissant dough (dough for a layered cereal flour puffed food) was obtained. The dough was baked in an oven at 215°C for 12 minutes. Thus, the croissants according to Example 1 and Comparative Examples 1 and 2 were obtained. Five experts evaluated the processability in rolling the plastic oil and fat composition in the dough (stretchability of the plastic oil and fat composition), and the melting mouthfeel and texture of the baked croissants on the basis of the criteria below. Table 3 shows the amount of MTG contained in the croissant dough and the evaluation results.

**[Table 2]**

| Table 2: Components of croissant unit: mass% | |
|---|---|
| Strong flour | 27.7 |
| Medium-strength flour | 27.7 |
| Superior soft sugar | 3.3 |
| Whole egg | 2.8 |
| Skim milk | 1.7 |
| Salt | 0.9 |
| Shortening¹⁾ | 3.3 |
| Yeast | 2.8 |
| Yeast food | 0.6 |
| Water | 29.2 |
| Total | 100 |
| Additionally, 500 g of plastic oil and fat composition to be rolled-in was used relative to 1800 g of the above components (50 parts by mass of plastic oil and fat composition was used relative to 100 parts by mass of cereal flour) | |

| | |
|---|---|
| 1): containing MTG by 0 mass% | |

### <Evaluation criteria on processability in rolling-in and croissants>

Evaluation criteria on processability (stretchability) of plastic oil and fat composition in rolling-in
Excellent: highly stretchable
Good: stretchable
Not very good: oils and fats are likely to be separated or kneaded into dough, which is a little defective.
Poor: oils and fats are separated or kneaded into dough, which is defective.

Evaluation criteria on melting mouthfeel of croissants
Excellent: melts quickly in the mouth and very tasty
Good: satisfying
Not very good: a little waxy or wet
Poor: waxy and wet

### Evaluation criteria on texture of croissants

Excellent: crispy on the outside but soft on the inside, which is very good.
Good: crispy and tasty
Not very good: crispy but hard, or not very crispy
Poor: coarse and hard, or not crispy

**[Table 3]**

| Table 3: Content amount of MTG in croissant dough (mass%) and evaluation on croissants | | | |
|---|---|---|---|
| | Example 1 | Comparative Example 1 | Comparative Example 2 |
| Plastic oil and fat composition | 1 | 2 | 3 |
| Content amount of MTG | 14.1 | 5.3 | 0.9 |
| Processability | Excellent | Excellent | Excellent |
| Melting mouthfeel | Excellent | Good | Not very good |
| Texture | Excellent | Not very good | Not very good |

## Claims

1. Dough for a layered cereal flour puffed food, comprising 10 to 20 mass% of triacylglycerol containing one or more kinds of fatty acids selected from caproic acid, caprylic acid, and capric acid as a constituent fatty acid.

2. The dough for a layered cereal flour puffed food according to claim 1, wherein the caproic acid, caprylic acid, and capric acid in the triacylglycerol include caproic acid by 30 mass% or less.

3. The dough for a layered cereal flour puffed food according to claim 1 or 2, wherein the caproic acid, caprylic acid, and capric acid in the triacylglycerol include capric acid by 30 mass% or more.

4. The dough for a layered cereal flour puffed food according to any of claims 1 to 3, wherein in triacylglycerol containing one or more kinds of fatty acids selected from caproic acid, caprylic acid, and capric acid as the constituent fatty acid, triacylglycerol consisting only of fatty acids selected from caproic acid, caprylic acid, or capric acid or combination thereof as the constituent fatty acid is included by 30 mass% or more.

5. A layered cereal flour puffed food obtained by heating and baking the dough for a layered cereal flour puffed food according to any of claims 1 to 4.

6. A plastic oil and fat composition to be rolled-in, comprising from 35 to 80 mass% of triacylglycerol containing one or more kinds of fatty acids selected from caproic acid, caprylic acid, and capric acid as a constituent fatty acid.

7. The plastic oil and fat composition to be rolled-in according to claim 6, comprising oils and fats A and oils and fats B:
oils and fats A: oils and fats with a solid fat content (SFC) of 60 to 100% at 20°C, 35 to 90% at 30°C, 0 to 50% at 40°C, and 0 to 30% at 45°C; and
oils and fats B: oils and fats with a solid fat content (SFC) of 10% or less at 10°C, containing 40 mass% or more of triacylglycerol containing one or more kinds of fatty acids selected from caproic acid, caprylic acid, and capric acid as a constituent fatty acid.

8. A method of manufacturing dough for a layered cereal flour puffed food, the method comprising rolling a plastic oil and fat composition, which includes triacylglycerol containing one or more kinds of fatty acids selected from caproic acid, caprylic acid, and capric acid as a constituent fatty acid, by 30 to 70 parts by mass with respect to 100 parts by mass of cereal flour, and then providing dough including 10 to 20 mass% of triacylglycerol containing one or more kinds of fatty acids selected from caproic acid, caprylic acid, and capric acid as the constituent fatty acid.

## Patentansprüche

1. Teig für eine gepuffte Speise aus geschichtetem Getreidemehl, umfassend 10 bis 20 Massen-% Triacylglycerin, enthaltend eine oder mehrere Arten von Fettsäuren, ausgewählt aus Capronsäure, Caprylsäure und Caprinsäure, als Fettsäurebestandteil.

2. Teig für eine gepuffte Speise aus geschichtetem Getreidemehl nach Anspruch 1, wobei die Capronsäure, Caprylsäure und Caprinsäure im Triacylglycerin Capronsäure mit 30 Massen-% oder weniger enthalten.

3. Teig für eine gepuffte Speise aus geschichtetem Getreidemehl nach Anspruch 1 oder 2, wobei die Capronsäure, Caprylsäure und Caprinsäure im Triacylglycerin Caprinsäure mit 30 Massen-% oder mehr enthalten.

4. Teig für eine gepuffte Speise aus geschichtetem Getreidemehl nach einem der Ansprüche 1 bis 3, wobei in Triacylglycerin, das eine oder mehrere Arten von Fettsäuren, ausgewählt aus Capronsäure, Caprylsäure und Caprinsäure, als die Fettsäurebestandteil enthält, das Triacylglycerin, nur bestehend aus Fettsäuren, ausgewählt aus Capronsäure, Caprylsäure oder Caprinsäure oder einer Kombination davon als Fettsäurebestandteil, zu 30 Massen-% oder mehr enthalten ist.

5. Gepuffte Speise aus geschichtetem Getreidemehl, erhalten durch Erhitzen und Backen des Teigs für eine gepuffte Speise aus geschichtetem Getreidemehl nach einem der Ansprüche 1 bis 4.

6. Formbare Öl- und Fettzusammensetzung zum Einrollen, umfassend 35 bis 80 Massen-% Triacylglycerin, das eine oder mehrere Arten von Fettsäuren, ausgewählt aus Capronsäure, Caprylsäure und Caprinsäure, als Fettsäurebestandteil enthält.

7. Formbare Öl- und Fettzusammensetzung zum Einrollen nach Anspruch 6, umfassend Öle und Fette A und Öle und Fette B:
Öle und Fette A: Öle und Fette mit einem Festfettgehalt (SFC) von 60 bis 100 % bei 20 °C, 35 bis 90 % bei 30 °C, 0 bis 50 % bei 40 °C und 0 bis 30 % bei 45 °C; und
Öle und Fette B: Öle und Fette mit einem Festfettgehalt (SFC) von 10 % oder weniger bei 10 °C, enthaltend 40 Massen-% oder mehr Triacylglycerin, das eine oder mehrere Arten von Fettsäuren, ausgewählt aus Capronsäure, Caprylsäure, und Caprinsäure, als Fettsäurebestandteil enthält.

8. Verfahren zur Herstellung von Teig für eine gepuffte Speise aus geschichtetem Getreidemehl, wobei das Verfahren das Rollen einer formbaren Öl- und Fettzusammensetzung umfasst, die 30 bis 70 Massenteile Triacylglycerin, das eine oder mehrere Arten von Fettsäuren, ausgewählt aus Capronsäure, Caprylsäure und Caprinsäure, als Fettsäurebestandteil enthält, bezogen auf 100 Massenteile Getreidemehl enthält, und dann Bereitstellen eines Teigs, der 10 bis 20 Massen-% Triacylglycerin, das eine oder mehrere Arten von Fettsäuren enthält, ausgewählt aus Capronsäure, Caprylsäure und Caprinsäure, als Fettsäurebestandteil enthält.

## Revendications

1. Pâte pour aliment soufflé à base de farine de céréales en couches, comprenant de 10 à 20 % en masse de triacylglycérol contenant un ou plusieurs types d'acides gras choisis parmi l'acide caproïque, l'acide caprylique et l'acide caprique en tant qu'acide gras constitutif.

2. Pâte pour aliment soufflé à base de farine de céréales en couches selon la revendication 1, dans laquelle l'acide caproïque, l'acide caprylique et l'acide caprique dans le triacylglycérol incluent de l'acide caproïque à hauteur de 30 % en masse ou moins.

3. Pâte pour aliment soufflé à base de farine de céréales en couches selon la revendication 1 ou 2, dans laquelle l'acide caproïque, l'acide caprylique et l'acide caprique dans le triacylglycérol incluent de l'acide caprique à hauteur de 30 % en masse ou plus.

4. Pâte pour aliment soufflé à base de farine de céréales en couches selon l'une quelconque des revendications 1 à 3, dans laquelle, dans le triacylglycérol contenant un ou plusieurs types d'acides gras choisis parmi l'acide caproïque, l'acide caprylique et l'acide caprique en tant qu'acide gras constitutif, le triacylglycérol constitué uniquement d'acides gras choisis parmi l'acide caproïque, l'acide caprylique ou l'acide caprique ou une combinaison de ceux-ci en tant qu'acide gras constitutif est inclus à hauteur de 30 % en masse ou plus.

5. Aliment soufflé à base de farine de céréales en couches obtenu par chauffage et cuisson de la pâte pour aliment soufflé à base de farine de céréales en couches selon l'une quelconque des revendications 1 à 4.

6. Composition plastique d'huile et de graisse à laminer, comprenant de 35 à 80 % en masse de triacylglycérol contenant un ou plusieurs types d'acides gras choisis parmi l'acide caproïque, l'acide caprylique et l'acide caprique en tant qu'acide gras constitutif.

7. Composition plastique d'huile et de graisse à laminer selon la revendication 6, comprenant des huiles et des graisses A et des huiles et des graisses B :
huiles et graisses A : huiles et graisses ayant une teneur en matières grasses solides (SFC) de 60 à 100 % à 20 °C, de 35 à 90 % à 30 °C, de 0 à 50 % à 40 °C et de 0 à 30 % à 45 °C ; et
huiles et graisses B : huiles et graisses ayant une teneur en matières grasses solides (SFC) de 10 % ou moins à 10 °C, contenant 40 % en masse ou plus de triacylglycérol contenant un ou plusieurs types d'acides gras choisis parmi l'acide caproïque, l'acide caprylique et l'acide caprique en tant qu'acide gras constitutif.

8. Procédé de fabrication de pâte pour aliment soufflé à base de farine de céréales en couches, le procédé comprenant le laminage d'une composition plastique d'huile et de graisse, comprenant du triacylglycérol contenant un ou plusieurs types d'acides gras choisis parmi l'acide caproïque, l'acide caprylique et l'acide caprique en tant qu'acide gras constitutif, à hauteur de 30 à 70 parties en masse par rapport à 100 parties en masse de farine de céréale, puis l'obtention d'une pâte comprenant de 10 à 20 % en masse de triacylglycérol contenant un ou plusieurs types d'acides gras choisis parmi l'acide caproïque, l'acide caprylique et l'acide caprique en tant qu'acide gras constitutif.
